# FASCICULE DE BREVET EUROPEEN

(11) **EP 0 570 260 B1**
(45) Date de publication et mention de la délivrance du brevet: **28.07.1999**
(21) Numéro de dépôt: 93401163.6
(22) Date de dépôt: 06.05.1993
(51) Int. Cl.: B05D 3/04, B05B 15/04, C03C 17/00

(54) **Procédé et dispositif de revêtement d'une surface d'un vitrage**
Verfahren und Vorrichtung zur Beschichtung einer Glasscheibenoberfläche
Process and device for coating one surface of a glass pane

(30) Priorité: 09.05.1992 DE 4215317
(43) Date de publication de la demande: 18.11.1993
(73) Titulaire: SAINT-GOBAIN VITRAGE, 92400 Courbevoie (FR); SEKURIT SAINT GOBAIN Deutschland GmbH & Co. KG, 52066 Aachen (DE)
(72) Inventeur: Schäfer, Wolfgang, Dr., W-5100 Aachen (DE); Häussler, Günther, W-5100 Aachen (DE); Linden, Ludwig, W-5100 Aachen (DE)
(74) Mandataire: Muller, René

(56) Documents cités:
- DE-A- 3 105 082
- GB-A- 2 260 091

## Description

La présente invention concerne un procédé de revêtement d'une surface d'un vitrage par application d'un liquide ou d'une matière pulvérulente à l'aide d'un dispositif de pulvérisation ou d'atomisation et des dispositifs permettant de réaliser le procédé.

Des vitrages peuvent être dotés d'une couche transparente ou opaque aux fins les plus diverses à l'aide d'une buse de pulvérisation ou d'atomisation ou d'un autre dispositif de pulvérisation ou d'atomisation. Par exemple, des vitrages peuvent être revêtus, à des fins architecturales, sur une surface d'une couche de couleur transparente constituée d'une laque ou d'une encre à cuire ou encore d'une solution d'un sel métallique, qui est transformée par pyrolyse en couche d'oxyde métallique.

On connaît également le revêtement de vitrages, par exemple de vitrages automobiles, au moyen d'une solution réactive liquide qui durcit, après application sur le vitrage en une couche de protection souple en polyuréthane (document EP-B1 0 161 184). Ces couches de polyuréthane peuvent présenter des propriétés antiéclats et/ou antibuée. En outre, de telles couches souples ont la propriété de posséder une bonne résistance aux rayures en raison d'un certain "effet autocuratif".

Lorsque l'on revêt une surface d'un vitrage au moyen d'un liquide débité par des dispositifs de pulvérisation ou d'atomisation, on ne peut en règle générale éviter que la matière de revêtement ne déborde sur la périphérie du vitrage et ne se dépose sur les bords du côté postérieur du vitrage. Cet effet est indésirable dans de nombreux cas. Par exemple, la matière de revêtement présente sur les bords du côté postérieur du vitrage peut susciter des difficultés lorsque l'on installe par collage de tels vitrages revêtus, dans la mesure où l'adhérence de la matière adhésive au verre est ainsi diminuée. Mais, pour des raisons esthétiques également, par exemple lorsque l'on revêt des vitrages de couches colorées non transparentes en vue de les utiliser en architecture d'intérieur, cet effet s'avère gênant.

Il est connu, dans le domaine des bouteilles, par exemple dans le document GB 1 441 525, d'éviter que le fond de la bouteille soit revêtu. Pour cela, une bande transporteuse, située à proximité du fond de la bouteille, est déroulée à la même vitesse et dans la même direction que les bouteilles. Un rideau d'air peut éventuellement être constitué à partir d'une ouverture située dans un caisson de distribution d'air, cette ouverture étant disposée approximativement à l'aplomb du centre du fond de la bouteille. Ce document concerne le revêtement des bouteilles. Le problème de la qualité optique n'est pas abordé.

L'invention a pour but de procurer un dispositif qui permet d'éviter, lors du revêtement d'une surface d'un vitrage par application d'un liquide ou d'une matière pulvérulente à l'aide d'un dispositif de pulvérisation ou d'atomisation, que la matière de revêtement ne déborde sur le côté postérieur à revêtir, surtout dans la zone de ses bords, afin de ne pas altérer notamment la qualité optique du vitrage.

Selon l'invention, on atteint ce but en créant, pendant l'application même du liquide ou de la matière pulvérulente, sur la surface postérieure du vitrage et sur toute la périphérie du vitrage, un rideau de gaz, en particulier un rideau d'air dirigé radialement vers l'extérieur parallèlement à la surface du côté postérieur, afin d'éviter que le revêtement ne se dépose sur la surface postérieure du vitrage et sur ses bords.

L'objet de l'invention est donc un dispositif pour le revêtement d'une surface d'un vitrage, en position horizontale, par application d'un liquide ou d'une matière pulvérulente à l'aide d'un dispositif de pulvérisation ou d'atomisation, situé à un poste de revêtement, ledit dispositif comportant au moins un caisson de distribution d'air muni, sur sa partie supérieure, d'une plaque de fermeture dotée de supports pour soutenir le vitrage et de sorties d'air en forme d'ajutages, ce qui permet de constituer un rideau d'air uniforme lorsqu'on alimente le caisson de distribution en air pendant l'application, ce rideau étant dirigé radialement vers l'extérieur, parallèlement à la feuille de verre, et étant situé entre la face postérieure du vitrage et la plaque de fermeture du caisson de distribution d'air.

Dans un développement approprié de l'invention, le rideau de gaz ou d'air, fermé, dirigé radialement vers l'extérieur est créé par des ouvertures de sortie de gaz ou d'air périphériques disposées parallèlement à la zone marginale du vitrage, à une certaine distance du bord et de la surface du vitrage.

Grâce à l'invention, il est acquis que, pendant l'application de la matière de revêtement sur la surface du vitrage, indépendamment de sa grandeur et de sa forme, le rideau de gaz ou d'air dirigé radialement vers l'extérieur, sur le côté postérieur du vitrage, refoule ou dévie la matière de revêtement uniformément vers l'extérieur dans la zone marginale périphérique du vitrage, de telle sorte que la matière de revêtement ne puisse déborder sur le côté postérieur du vitrage.

Le rideau de gaz ou d'air peut être créé dans un poste de revêtement stationnaire. Dans le cas d'un dispositif de support mobile pour le vitrage à revêtir, le rideau de gaz ou d'air peut être entraîné à travers le poste de revêtement conjointement avec le vitrage. Cet entraînement du rideau de gaz ou d'air, fermé, dirigé radialement vers l'extérieur à travers le poste de revêtement peut être utilisé avantageusement dans des installations travaillant en continu.

D'autres avantages et particularités de l'invention font l'objet des revendications dépendantes et ressortiront des exemples de réalisation expliqués ci-dessous avec référence aux dessins annexés, dans lesquels :
la Fig. 1 est une vue en coupe verticale d'une table de travail convenant pour l'exécution du procédé, au cours du revêtement d'une glace circulaire;
la Fig. 2 est une vue en coupe verticale d'une table de travail convenant pour le revêtement d'un vitrage automobile plan avec un caisson de distribution d'air (plan II-II de la Fig. 3);
la Fig. 3 est une vue en plan de la Fig. 2;
la Fig. 4 est une vue en coupe verticale d'une table de travail convenant pour le revêtement d'un pare-brise bombé avec un caisson de distribution d'air (plan IV-IV de la Fig. 5);
la Fig. 5 est une vue en plan de la Fig. 4;
la Fig. 6 est une représentation schématique d'une installation de revêtement travaillant en continu, en coupe longitudinale;
la Fig. 7 est une vue en plan, en partie en coupe, selon le plan VII-VII de la Fig. 6, et
la Fig. 8 et une vue en coupe dans le plan VIII-VIII de la Fig. 7 ou de la Fig. 6.

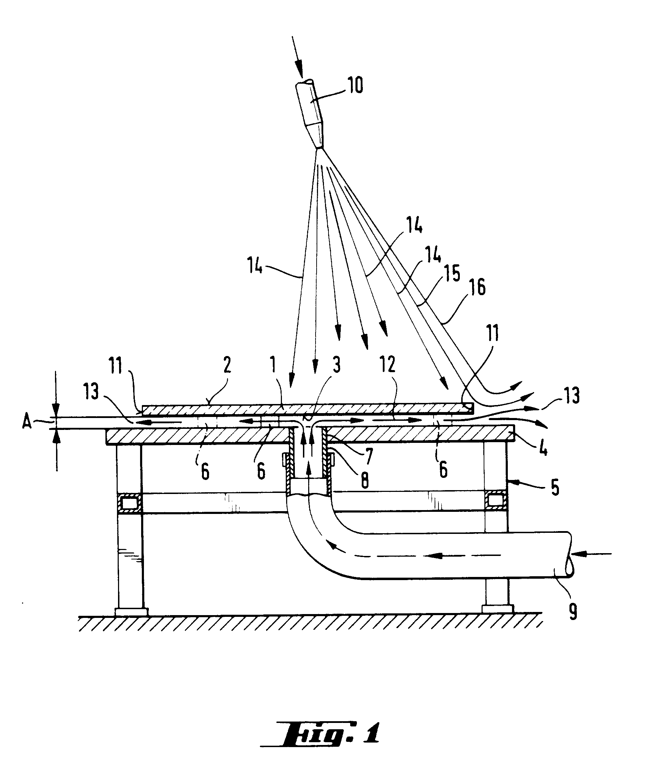

A l'aide du dispositif qui n'est pas représenté à l'échelle sur la Fig. 1, une glace plane et circulaire 1 d'un diamètre d'environ 50 cm doit être dotée, sur la surface 2 revêtue de la couche de tain, d'un revêtement antiéclats par pulvérisation d'un liquide réactionnel. A cette fin, la glace 1 est déposée, centrée sur un plateau 4 d'une table de travail 5, à l'aide de supports 6, de telle sorte qu'entre le plateau 4 et le verso 3 de la glace 1, un espace uniforme A d'environ 3 mm soit ménagé. Les supports 6, dans ce cas, sont au nombre de 3, ce qui est suffisant pour assurer une fixation statique certaine, mais, par exemple, ils peuvent être également dotés d'un revêtement de caoutchouc antidérapant.

Le plateau 4 présente au centre, une ouverture 7 avec une tubulure de raccordement 8 à laquelle est fixé un tuyau souple d'air comprimé 9. Avant l'application du liquide réactionnel, un flux volumique d'air est acheminé par le tuyau d'air comprimé 9 à partir d'une source d'air comprimé. Le flux d'air dirigé perpendiculairement au côté postérieur 3 de la glace 1 est dévié parallèlement à ce côté postérieur 3 de manière uniforme dans toutes les directions vers le bord 11 de la glace et forme ainsi un rideau d'air périphérique, fermé, dirigé radialement vers l'extérieur. L'écoulement de l'air au côté postérieur 3 est indiqué par les flèches 12 et le rideau d'air par les flèches 13.

Après avoir créé le rideau d'air, dans ce montage stationnaire, on pulvérise sur la surface 2 de la glace 1, le liquide réactionnel indiqué par les jets de pulvérisation 14, 15 et 16 à l'aide d'un dispositif de pulvérisation indiqué 10 qui peut être, par exemple, un pistolet de pulvérisation monté fixe ou commandé à la main. Les jets de pulvérisation incidents 15, 16 parvenant dans la zone du bord 11 de la glace ou à l'extérieur de celle-ci sont refoulés uniformément vers l'extérieur par le rideau d'air périphérique et ne peuvent se déposer sur la zone marginale du côté postérieur. Au terme de l'opération de revêtement, l'amenée d'air comprimé est coupée et la glace 1 est soumise à un processus de séchage afin de faire réagir le liquide réactionnel.

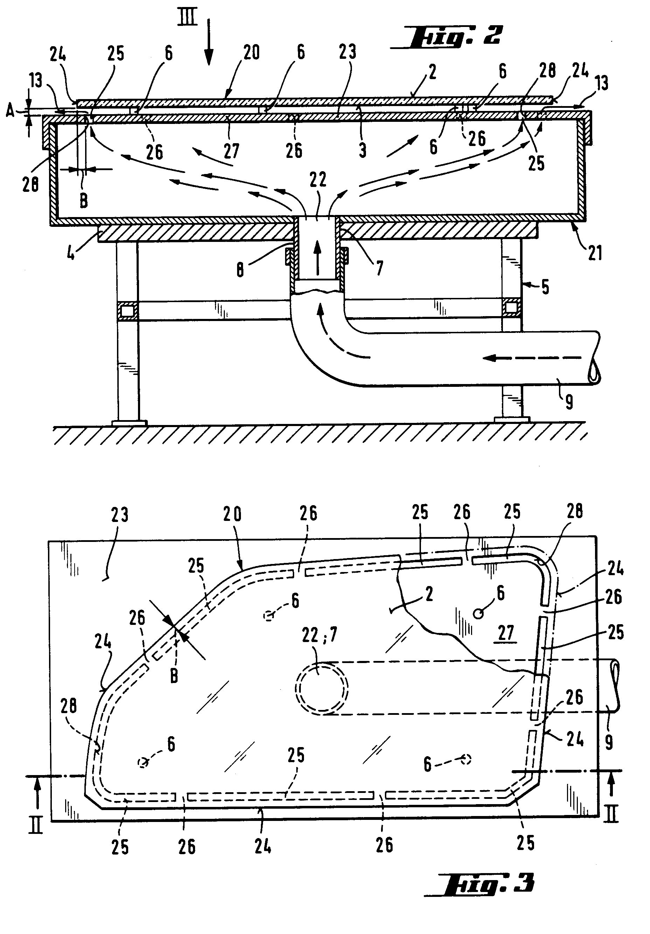

Le mode opératoire décrit avec référence à la Fig. 1 est praticable dans le cas de petites vitres de préférence circulaires. Des développements appropriés de l'invention, qui conviennent pour de plus grands formats de vitrages et des formes plus compliquées, comme, par exemple, des pare-brise, des lunettes arrière ou des vitrages latéraux de véhicules automobiles, seront décrits ci-dessous avec référence aux Fig. 2 à 5, le rideau d'air étant à nouveau formé dans un poste de revêtement stationnaire.

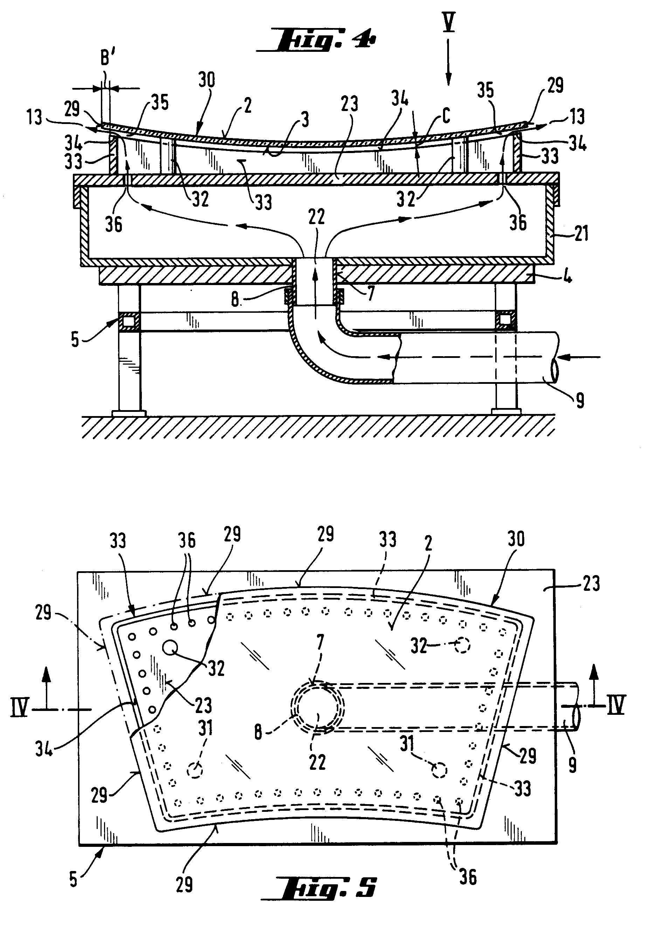

Un vitrage automobile plat 20 (Fig. 2 et 3) doit être revêtu, sur sa surface 2, d'un mélange réactionnel réagissant pour former un polyuréthane, lequel mélange forme après séchage un revêtement résistant aux rayures et à l'abrasion. Ici également, il faut éviter, lorsque l'on pulvérise le liquide, que celui-ci ne déborde sur le côté postérieur 3 ou dans la zone périphérique de ce côté postérieur 3, ce qui est à nouveau réalisé selon l'invention à l'aide d'un rideau d'air, fermé, dirigé radialement vers l'extérieur.

Sur le plateau 4 de la table de travail 5 comprenant l'ouverture centrale 7, la tubulure de raccordement 8 et le tuyau souple d'air comprimé 9 fixé à celle-ci, est monté un caisson de distribution d'air 21 présentant une ouverture 22 qui correspond à l'ouverture 7 en termes de forme et de dimensions. Sur le caisson de distribution d'air 21 se trouve une plaque de fermeture supérieure 23 portant des supports 6 pour déposer le vitrage automobile 20. Dans cet exemple, quatre supports 6 sont prévus répartis sur la plaque de fermeture supérieure 23, de telle sorte que le vitrage automobile 20 qui a plus ou moins la forme d'un trapèze soit posé de manière suffisamment stable au plan statique.

Par ailleurs, dans la plaque de fermeture 23 est aménagé un réseau d'ouvertures de sortie d'air en forme de fentes 25 adapté à la forme du vitrage automobile 20 et, décalé vers l'intérieur du vitrage parallèlement au bord 24 du vitrage. Les parties intermédiaires 26 servent simplement à soutenir la partie interne 27 de la plaque de fermeture 23. L'écart A entre le caisson de distribution d'air 21 et le côté postérieur 3 du vitrage automobile 20 est d'environ 2 mm et l'écart B entre le bord extérieur 28 des ouvertures de sortie d'air en forme de fentes 25 et le bord 24 du vitrage automobile est d'environ 3 mm.

Si, avant ou pendant la pulvérisation, on achemine par le tuyau souple 9 de l'air comprimé au dispositif, cet air comprimé parvient par les ouvertures 7, 22 et le caisson de distribution d'air 21 aux ouvertures de sortie d'air en forme de fentes 25, rencontre dans la zone marginale externe le côté postérieur 3 du vitrage automobile 20 et crée un rideau d'air (flèches 13), fermé, dirigé radialement vers l'extérieur, qui refoule les jets de pulvérisation (non indiqués ici) vers l'extérieur. Ce dispositif selon l'invention garantit que, même dans le cas de vitrages de grandes dimensions et de formes compliquées, un rideau d'air uniforme sera formé sur toute la périphérie par une alimentation d'air définie via les ouvertures de sortie d'air en forme de fente 25.

Dans la mesure où l'on doit revêtir des vitrages bombés, on peut, pour former un rideau d'air uniforme sur toute la périphérie, procéder de la même manière que celle décrite ci-dessus avec des ouvertures de sortie d'air, mais à présent, au lieu de la plaque de fermeture plane 23, on utilisera une plaque de fermeture adaptée au bombé du vitrage.

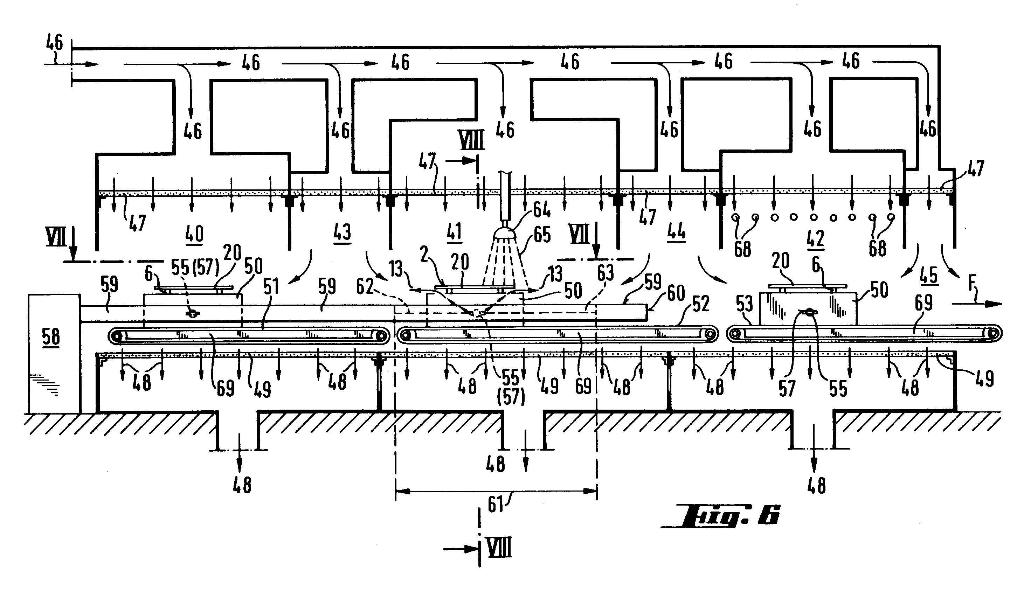

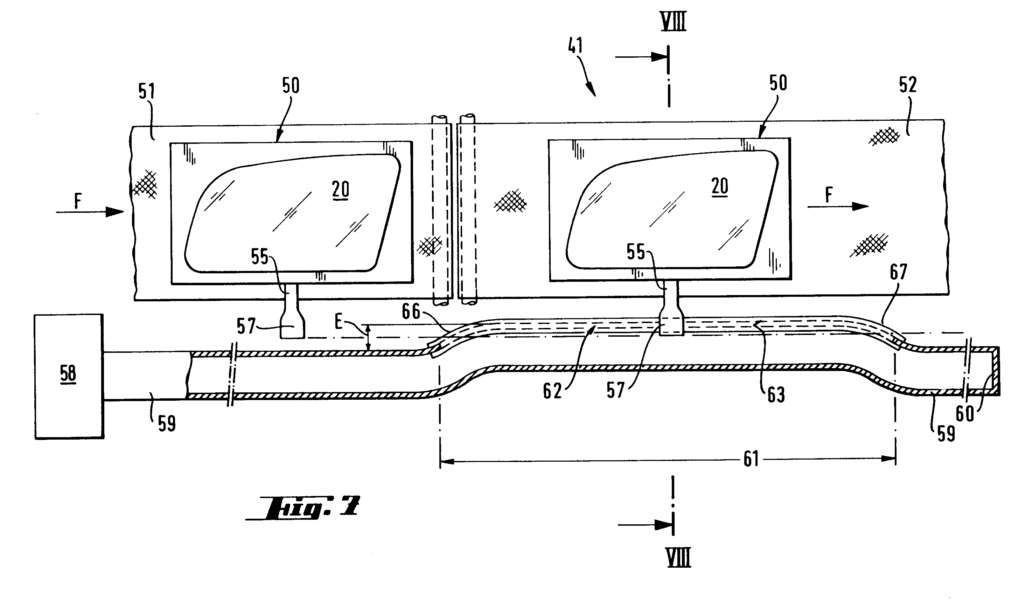

Une autre possibilité sera expliquée ci-dessous avec référence aux Fig. 4 et 5. Un vitrage automobile bombé 30 doit être revêtu, par pulvérisation, sur sa surface 2 tournée vers l'intérieur de l'habitacle du véhicule, d'un liquide réactionnel qui réagira pour donner une couche antibuée après séchage. Pour éviter le débordement du liquide de revêtement, au cours du revêtement, sur le côté postérieur 3 du vitrage 30, on utilisera à nouveau une table de travail 5 avec un plateau 4, un caisson de distribution d'air 21 monté sur cette table et équipé d'une plaque de fermeture supérieure 23 ainsi que du système d'alimentation d'air décrit.

Le vitrage automobile 30 est positionné sur la plaque de fermeture 23 à l'aide de supports 31, 32 de longueurs différentes correspondant au bombé et à la situation souhaitée du vitrage 30. La plaque de fermeture supérieure 23 est dotée d'une aile périphérique 33 adaptée à la forme ou au bombé et à la position du vitrage automobile 30, parallèle au bord 29 du vitrage et décalée vers l'intérieur, la hauteur de l'aile étant inférieure à la hauteur des supports 31, 32 et étant telle que sa face limite supérieure 34 forme avec le côté postérieur 3 du vitrage 30 un interstice de sortie d'air périphérique 35 d'une largeur C d'environ 2 mm. L'écart B' entre le bord du pare-brise 29 et l'aile 33 est de l'ordre de 3 mm. La plaque de fermeture 23 présente par ailleurs des ouvertures de sortie d'air en forme de lumières 36, qui forment un réseau d'ajutages qui s'étend à côté de l'aile 33 dont il est décalé vers l'intérieur.

Lorsqu'on ouvre l'alimentation en air comprimé, celui-ci parvient via la conduite d'air comprimé 9 et les ouvertures 7, 22 dans le caisson de distribution d'air 21 et est acheminé par les orifices 36 au voisinage de l'interstice de sortie d'air 35, par lequel il s'échappe et forme à nouveau un rideau d'air, fermé, dirigé radialement vers l'extérieur (flèches 13).

Selon l'idée de l'invention, il est avantageux, dans des installations de revêtement travaillant en continu, de former le rideau d'air dans un dispositif de support mobile pour le vitrage à revêtir et de faire passer ce dispositif avec le vitrage à travers le poste de revêtement.

Selon une première forme de réalisation de l'invention, qui n'a pas été représentée aux dessins, la table de travail décrite ou le caisson de distribution d'air peut être conçu déplaçable et peut être doté d'un tuyau souple qui est entraîné conjointement à travers l'installation de revêtement. Le tuyau souple est relié à une conduite d'amenée d'air de manière à pouvoir être couplé et désaccouplé. Via une soupape installée dans la conduite d'amenée d'air, l'alimentation d'air et, par conséquent la formation du rideau d'air peuvent, en outre, être régies en fonction de la position de la table de travail ou du caisson de distribution d'air à l'intérieur de l'installation de revêtement.

Dans une autre forme de réalisation possible, qui n'a pas non plus été représentée ici, la table de travail est à nouveau conçue déplaçable et entraîne un réservoir d'air comprimé à travers l'installation de revêtement. Le réservoir d'air comprimé doté d'une soupape de détente est raccordé au caisson de distribution d'air et fournit l'air nécessaire pour la formation du rideau d'air. Via des capteurs, par exemple, l'alimentation d'air peut à nouveau être commandée en fonction de la position de la table de travail à l'intérieur de l'installation de revêtement.

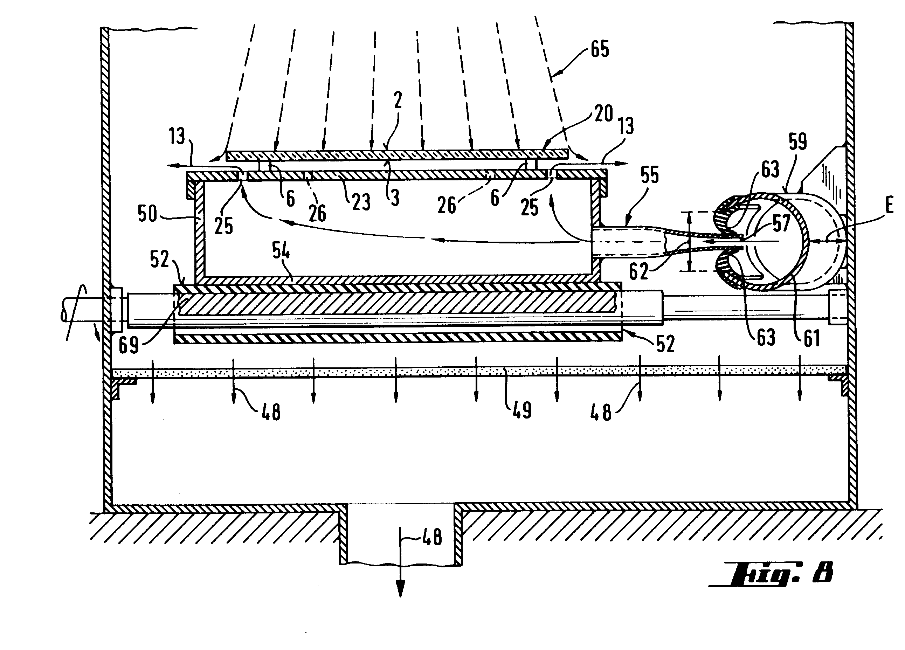

Une autre solution permettant de former le rideau d'air selon l'invention dans une installation de revêtement opérant en continu sera expliquée ci-dessous avec référence aux Fig. 6, 7 et 8.

La Fig. 6 est une vue schématique d'une installation de revêtement constituée d'un poste de préparation 40, d'un poste de revêtement 41, d'un poste de séchage 42 et de sas 43, 44 et 45 et au moyen de laquelle des vitrages automobiles 20 peuvent être revêtus par voie électrostatique d'un liquide réactionnel pour la formation d'un dépôt transparent antirayures et antibuée. Un système pour l'alimentation d'air frais (indiqué par les flèches 46) via des mats filtrants 47 et pour l'aspiration de l'air pollué (indiqué par les flèches 48) via des mats filtrants 49 fait partie de l'installation de revêtement. Les vitrages automobiles à revêtir 20 sont disposés selon l'invention sur des caissons de distribution d'air 50 et sont transportés avec eux dans le sens de la flèche F à travers l'installation de revêtement à l'aide de bandes transporteuses 51, 52 et 53 qui se déplacent sur des tables de support 69.

Comme on peut le voir tout particulièrement sur la Fig. 8, chaque caisson de distribution d'air 50 est doté d'un tube d'alimentation d'air sous la forme d'une lance 55 en saillie latéralement, centrée et disposée légèrement au-dessus du fond 54 du caisson de distribution d'air 50. A son extrémité, la lance 55 présente un embout 57.

L'installation de revêtement comporte, en outre, une source d'air comprimé 58 à laquelle est raccordée une conduite d'air rigide 59 (Fig. 7). La conduite d'air 59 fermée à son extrémité 60 est disposée parallèlement aux bandes transporteuses 51, 52 et s'étend au-delà du poste de revêtement 41 jusqu'au sas 44. Le centre de la conduite d'air 59 est disposé à une hauteur qui correspond à la hauteur de la lance 55 montée sur le caisson de distribution d'air 50 ou de l'embout 57. La conduite d'air 59 disposée latéralement par rapport aux bandes transporteuses 51, 52 présente, au voisinage du poste de revêtement 41, une partie droite 61, qui, via deux changements de direction 66, 67, se rapproche d'une distance E (coudage) plus près des bandes transporteuses 51, 52 que les parties de la conduite d'air 59 situées en amont et en aval de celle-ci. La partie 61 présente, dans le sens des bandes transporteuses 51, 52, une fente 62 qui est fermée par des lèvres de caoutchouc souple 63.

La pulvérisation du liquide réactionnel dans le poste de revêtement 41 s'effectue à l'aide d'une cloche à vitesse de rotation élevée 64 qui forme un cône de pulvérisation 65.

Le mode de fonctionnement du dispositif est le suivant :
après la formation du cône de pulvérisation 65 et la mise en marche des systèmes d'alimentation et d'évacuation d'air 46, 48 ainsi que des bandes transporteuses 52, 53, de l'air comprimé est introduit dans la conduite d'air 59 par mise en marche de la source d'air comprimé 58. Dans cette situation, les lèvres 63 ferment de manière étanche la fente 62 de la partie 61 de la conduite d'air 59 si bien que de l'air comprimé ne peut pas s'en échapper. A présent, le premier caisson de distribution d'air 50 est positionné avec la plaque de fermeture 23 et le vitrage automobile 20 sur la bande transporteuse 51 dans l'espace de préparation 40. L'embout 57 de la lance 55 est en l'occurrence situé à une distance de la conduite d'air 59 qui correspond plus ou moins à la moitié de l'espace E. Ensuite, la bande transporteuse 51 est enclenchée et la totalité de l'unité est transportée dans le sens de la flèche F et est prise en charge par la bande transporteuse 52. Au niveau du coude 66 de la partie 61 de la conduite d'air 59, l'embout 57 pénètre entre les lèvres 63 et peut prélever de l'air par la fente 62, cet air étant amené par la lance 55 dans le caisson de distribution d'air 50 et s'écoulant finalement de la manière décrite dans la zone marginale du vitrage automobile 20 en formant encore un rideau d'air (flèches 13) en amont du poste de revêtement 41 ou avant d'atteindre le cône de pulvérisation 65.

L'embout 57 est conformé de la même manière qu'une buse d'aspirateur à côtés aplatis pour assurer une bonne pénétration dans les lèvres 63 et pour maintenir à un niveau aussi bas que possible les pertes d'air au cours du prélèvement d'air comprimé autour de l'embout 57. Après le revêtement en continu à l'aide de la cloche à vitesse de rotation élevée 64, l'embout 57 se retire des lèvres 63 au niveau du coude 67 et l'amenée d'air est donc interrompue. Enfin, le vitrage automobile revêtu 20 est acheminé par la bande transporteuse 53 sous les générateurs de rayons infrarouges 68 du poste de séchage 42 et parvient à un poste d'enlèvement non représenté via le sas 45.

## Revendications

1. Dispositif pour le revêtement d'une surface d'un vitrage, en position horizontale, par application d'un liquide ou d'une matière pulvérulente à l'aide d'un dispositif de pulvérisation ou d'atomisation, situé à un poste de revêtement, ledit dispositif comportant au moins un caisson de distribution d'air muni, sur sa partie supérieure, d'une plaque de fermeture (23) dotée de supports (6, 31, 32) pour soutenir le vitrage (1, 20, 30) et de sorties d'air (25) en forme d'ajutages, ce qui permet de constituer un rideau d'air uniforme lorsqu'on alimente le caisson de distribution en air pendant l'application, ce rideau étant dirigé radialement vers l'extérieur, parallèlement à la feuille de verre, et étant situé entre la face postérieure du vitrage et la plaque de fermeture du caisson de distribution d'air.

2. Dispositif selon la revendication 1, les sorties d'air de la plaque de fermeture (23) étant décalées vers l'intérieur du vitrage, parallèlement au bord de celui-ci.

3. Dispositif selon l'une des revendications 1 ou 2, la plaque de fermeture supérieure (23) étant dotée d'une aile (33) périphérique adaptée à la forme du vitrage (30) et décalée vers l'intérieur parallèlement au bord du vitrage, la hauteur de cette aile étant inférieure à la hauteur des supports (31, 32) et sa face limite supérieure (34) formant avec le côté postérieur (3) du vitrage (30) un interstice de sortie d'air périphérique (35).

4. Dispositif selon l'une des revendications 1 à 3, **caractérisé en ce que** le caisson de distribution d'air étant déplaçable et étant doté d'un tuyau souple qui est raccordé à une conduite d'alimentation d'air via une valve qui peut être commandée en fonction de la position du caisson de distribution d'air à l'intérieur d'une installation de revêtement.

5. Dispositif selon l'une des revendications 1 à 3, **caractérisé en ce que** le caisson de distribution d'air (50) étant déplacable et étant doté d'une lance rigide en saillie latéralement (55) avec un embout (57) et latéralement à côté de la voie de transport du caisson de distribution d'air (50), dans la zone du poste de revêtement (41) est prévue, une conduite d'air rigide (59) qui présente une fente (62) fermée par des lèvres en caoutchouc souple (63), et à travers laquelle l'embout (57) de la lance (55) montée sur le caisson de distribution d''air (50) pénètre dans la conduite d'air (50) au moyen de l'air comprimé nécessaire.

## Claims

1. Device for coating the surface of a glass panel, in the horizontal position, by applying a liquid or powdery material by means of a spraying or atomization device, situated at a coating station, the said device having at least one air distribution chamber provided, at its top part, with a closure plate (23) provided with supports (6, 31, 32) for supporting the glass panel (1, 20, 30), and air outlets (25) in the form of slots, which makes it possible to form a uniform air curtain when the distribution chamber is fed with air during the application, this curtain being directed radially towards the outside, parallel to the sheet of glass, and being situated between the rear face of the glass panel and the air distribution chamber closure plate.

2. Device according to Claim 1, the air outlets of the closure plate (23) being offset towards the inside of the glass panel, parallel to the edge thereof.

3. Device according to one of Claims 1 or 2, the top closure plate (23) being provided with a peripheral flange (33) adapted to the shape of the glass panel (30) and offset towards the inside parallel to the edge of the glass panel, the height of this flange being less than the height of the supports (31, 32) and its top limit face (34) forming, with the rear side (3) of the glass panel (30), a peripheral air outlet gap (35).

4. Device according to one of Claims 1 to 3, the air distribution chamber being movable and being provided with a flexible tube which is connected to an air supply conduit via a valve which can be controlled according to the position of the air distribution chamber inside a coating installation.

5. Device according to one of Claims 1 to 3, the air distribution chamber (50) being movable and being provided with a rigid lance projecting laterally (55) with an end piece (57) and laterally alongside the conveyance channel of the air distribution chamber (50), in the area of the coating station (41) there is provided a rigid air conduit (59) which has a slot (62) closed by flexible rubber lips (63), and through which the end piece (57) of the lance (55) mounted on the air distribution chamber (50) enters the air conduit (50) by means of the required compressed air.

## Patentansprüche

1. Vorrichtung zum Beschichten einer Oberfläche einer Glasscheibe in horizontaler Lage durch Aufbringen einer Flüssigkeit oder eines pulverförmigen Materials mittels einer Sprüh- oder Zerstäubungseinrichtung, die an einer Beschichtungsstation angeordnet ist, wobei besagte Einrichtung mindestens einen Luftverteilerkasten umfaßt, der in seinem Oberteil mit einer Abschlußplatte (23) mit Stützen (6, 31, 32) zum Halten der Glasscheibe (1, 20, 30) und mit Luftaustritten (25) in Form von Düsen ausgestattet ist, wodurch sich durch Beaufschlagen des Luftverteilerkastens während des Beschichtens ein gleichmäßiger Luftvorhang bildet, der radial nach außen und parallel zur Glasscheibe gerichtet ist und zwischen der Rückseite der Glasscheibe und der Abschlußplatte des Luftverteilerkastens liegt.

2. Vorrichtung nach Anspruch 1, wobei die Luftaustritte in der Abschlußplatte (23) zum Scheibeninnern parallel zum Scheibenrand versetzt sind.

3. Vorrichtung nach Anspruch 1 oder 2, in der die obere Abschlußplatte (23) mit einem umlaufenden, an die Form der Glasscheibe (30) angepaßten und zum Innern parallel zum Rand der Glasscheibe versetzten Steg (33) versehen ist, dessen Höhe geringer ist als die Höhe der Stützen (31,32) und dessen obere Begrenzungsfläche (34) mit der Rückseite (3) der Glasscheibe (30) einen umlaufenden Luftausstrittsspalt (35) bildet.

4. Vorrichtung nach einem der Ansprüche 1 bis 3, **dadurch gekennzeichnet**, daß der Luftverteilerkasten verfahrbar ausgebildet und mit einem flexiblen Schlauch versehen ist, der mit einer Luftzuführungsleitung über ein Ventil verbunden ist, das in Abhängigkeit von der Position des Luftverteilerkastens innerhalb einer Beschichtungsanlage steuerbar ist.

5. Vorrichtung nach einem der Ansprüche 1 bis 3, **dadurch gekennzeichnet**, daß der Luftverteilerkasten (50) verfahrbar ausgebildet und mit einer starren, seitlich vorstehenden Lanze (55) mit einem Mundstück (57) versehen ist, und daß seitlich neben der Transportbahn des Luftverteilerkastens (50) im Bereich der Beschichtungsstation (41) eine starre Luftleitung (59) vorgesehen ist, die einen von gummielastischen Lippen (63) verschlossenen Schlitz (62) aufweist, durch den das Mundstück (57) der an dem Luftverteilerkasten (50) angeordneten Lanze (55) in die Luftleitung (59) eindringt und dabei den Luftverteilerkasten (50) mit der nötigen Druckluft versorgt.
